# EUROPÄISCHE PATENTANMELDUNG

(11) **EP 0 758 001 A1**
(43) Veröffentlichungstag der Anmeldung: **12.02.1997**
(21) Anmeldenummer: 96109641.9
(22) Anmeldetag: 15.06.1996
(51) Int. Cl.: C08K 11/00, C08L 23/04

(54) **Verfahren zur wertstofflichen Verarbeitung eines Sumpfproduktes aus einer destillativen Aufbereitung**

(30) Priorität: 21.07.1995 DE 19526627; 16.08.1995 DE 19530091
(71) Anmelder: Nordenia Verpackungswerke GmbH, D-49439 Steinfeld (DE)
(72) Erfinder: Lorenz, Arnulf, 01169 Dresden (DE); Walser, Hans Peter, 49439 Steinfeld (DE)
(74) Vertreter: Jabbusch, Wolfgang, Dr.Jur. Jabbusch, Wehser & Lauerwald Patentanwälte

(57) **Zusammenfassung**

Es wird ein Verfahren zur wertstofflichen Verarbeitung eines im wesentlichen lösungsmittelfreien Sumpfproduktes aus der destillativen Aufarbeitung eines verschmutzten organischen Lösungsmittels, das bei der Reinigung von Polyolefin, insbesondere von Polyolefinproduktionsabfällen oder gebrauchtem Polyolefin, anfällt, beschrieben. Das Sumpfprodukt wird dosiert mit mindestens einem weiteren anorganischen und/oder organischen Material vermischt.

## Beschreibung

Die Erfindung betrifft ein Verfahren zur wertstofflichen Verarbeitung eines im wesentlichen lösungsmittelfreien Sumpfproduktes aus der destillativen Aufarbeitung eines verschmutzten organischen Lösungsmittels, das bei der Reinigung von Polyolefin anfällt.

Polyolefine, insbesondere Polyethylen werden in großen Mengen zur Herstellung von Verpackungen verwendet. Aus dem Polyethylen können Folien hergestellt werden, die zu Schrumpfhauben, Säcken und dergleichen Verpackungen weiterverarbeitet werden.

Polyolefine als thermoplastische Kunststoffe sind aufgrund ihres strukturellen Molekülaufbaus wiederholt aufschmelzbar und verformbar. Sie sind für eine mehrmalige Wiederverwendung daher grundsätzlich geeignet. Einer Wiederverarbeitung zu hochwertigen Recyclingprodukten, vorzugsweise Polyethylenfolien mit definierten Eigenschaften, steht jedoch entgegen, daß die gebrauchten Gegenstände, insbesondere Folien, bei ihrer Herstellung anwendungsorientiert mit Zuschlagsstoffen, wie Antistatika, Gleitmittel, Thermo- oder UV-Stabilisatoren ausgerüstet werden, die dann im daraus hergestellten Recyclingprodukt in unbekannten Mengen und Kombinationen vorliegen. Eine Sortierung der gebrauchten Gegenstände nach Inhaltsstoffen ist technisch und wirtschaftlich kaum möglich.

Recyclingprodukte, insbesondere Folien, die mit diesen Inhaltsstoffen belastet sind, führen bei ihrer Weiterverarbeitung zu Problemen, beispielsweise beim Kleben, Schweißen oder Bedrucken. Vielfach lösen sich Verbindungsnähte nach anfänglich guten Eigenschaften erst beim Anwender auf.

Darüber hinaus enthalten die gebrauchten Folien Abbaustoffe des Polyethylens wie Polyolefinwachse sowie Abbauprodukte der Zusatzstoffe. Diese entstehen während der Lebensdauer im Zuge von Verarbeitungsprozessen sowie durch Wärme-, Licht- und Wettereinwirkung. Diese bewirken zum Teil eine erhebliche Minderung der Gebrauchseigenschaften des Recyclingprodukts. Letztlich sind die gebrauchten Folien, besonders Verpackungsfolien, mehr oder minder stark bedruckt. Diese Druckfarben führen bei der Extrusion von aufbereiteten Materialien zu Polyethylenfolien mit einer starken undefinierbaren Verfärbung, so daß daraus nur dunkel überfärbte Müllsäcke hergestellt werden können. Bei sehr hohen Druckflächenanteilen im Verhältnis zur Polymermenge entstehen sogar unbrauchbare von Zersetzungsgasen geschäumte Regranulate mit einem intensiven, unangenehmen Geruch.

In der DE 43 42 848 A1, die von der Anmelderin stammt, werden daher Verfahren zur Reinigung von Polyolefin, insbesondere von zerkleinerten Polyethylenfolienschnitzeln aus Produktionsabfällen oder gebrauchten Polyethylenaltfolien sowie Vorrichtungen zur Durchführung der Verfahren beschrieben. Diese Reinigung wird vorzugsweise mittels Ethylacetat als Lösungsmittel durchgeführt. Bei den in der DE 43 42 848 A1 beschriebenen Verfahren fällt stets bei der destillativen Aufbereitung des Lösungsmittels ein Sumpfprodukt als Prozeßrückstand an. Während das gereinigte Polyolefin in Form von Kunststoffschnitzeln sowie Granulat wieder verarbeitet werden kann, muß das Sumpfprodukt einer kostenintensiven Entsorgung zugeführt werden. Das Polyethylen-Recyclingverfahren nach dem Stand der Technik produziert also erneut ein Abfallprodukt.

Die Aufgabe der Erfindung besteht darin, das Verfahren nach dem Stand der Technik so weiter zu bilden, daß die Entsorgung des Sumpfproduktes als Abfall entfallen kann und die wertstoffliche Verarbeitung des Sumpfproduktes möglich wird.

Diese Aufgabe wird erfindungsgemäß durch ein Verfahren zur wertstofflichen Verarbeitung eines im wesentlichen lösungsmittelfreien Sumpfproduktes aus der destillativen Aufarbeitung eines verschmutzten organischen Lösungsmittels gelöst, das bei der Reinigung von Polyolefin anfällt, wobei das Sumpfprodukt über eine Dosierung mit mindestens einem weiteren Material vermischt wird. Diese Dosierung kann sowohl volumetrisch als auch gravimetrisch durchgeführt werden.

In einer bevorzugten Ausführungsform erfolgt die volumetrische Dosierung mittels eines Schneckenförderers und/oder einer Kolbendosierpumpe, die gravimetrische Dosierung mittels einer Wiegevorrichtung.

In einer weiteren bevorzugten Ausführungsform wird als weiteres Material ein anorganisches oder organisches Material verwendet. Dieses Material kann in Pulverform, als Granulat, als Agglomerat oder als Flüssigkeit zugemischt werden.

Als anorganischer Stoff kommt zum Beispiel Kreide, Kaolin, Molsiebe, Silikate, Bleicherden oder Farbpigmente, wie Eisenoxide, Titandioxid oder Ruß zum Einsatz. Organische Stoffe als Zumischprodukte sind zum Beispiel Farbpigmente, Thermo- und Lichtstabilisatoren, Gleitmittel, Antistatika oder Polyethylengranulate. Die Vermischung kann auch in Kombination der Stoffe erfolgen.

Das Sumpfprodukt tritt als Prozeßrückstand bei der Restlösungsmitteleindampfung aus der Aufbereitung des verschmutzten Lösungsmittels, das bei der Reinigung von Polyethylenproduktionsabfällen oder gebrauchten Polyethylen-Altfolien anfällt, auf. Die Anfallmengen an Prozeßrückstand betragen im allgemeinen 2,0-5,0 Gew.-% der eingesetzten Produktionsabfälle bzw. Altfolien.

Das Sumpfprodukt stellt eine unterschiedlich gefärbte, teilkristalline, wachsartige Masse dar mit einem Erweichungsbereich von 60° C bis 120° C. Sein Lösungsmittelgehalt nach der Restlösungsmitteleindampfung liegt bei unter 0,1 Gew.-%, seine Restfeuchte nach der Restlösungsmitteleindampfung bei unter 1,0 Gew.-%. Die stoffliche Zusammensetzung des Rückstandes ergab organische und anorganische Bestandteile, wobei erstere zu über 95 % vertreten sind. Sie bestehen u.a aus paraffinischen Wachsen, die den Hauptanteil darstellen, Polyethylenfolienzuschlagsstoffen, wie Gleitmittel, Antistatika, Thermo- und Lichtstabilisatoren, sowie Druckfarbenbindemittel, wie Nitrocellulose, Druckfarbenverarbeitungshilfsmittel wie Phthalate im ppm-Bereich. Die anorganischen Bestandteile sind hauptsächlich die bei der Polyehtylenfolienherstellung eingesetzten Antiblockmittel, Kreide und Kieselsäuren sowie Farbpigmente wie Titandioxid, Eisenoxide und Ruß.

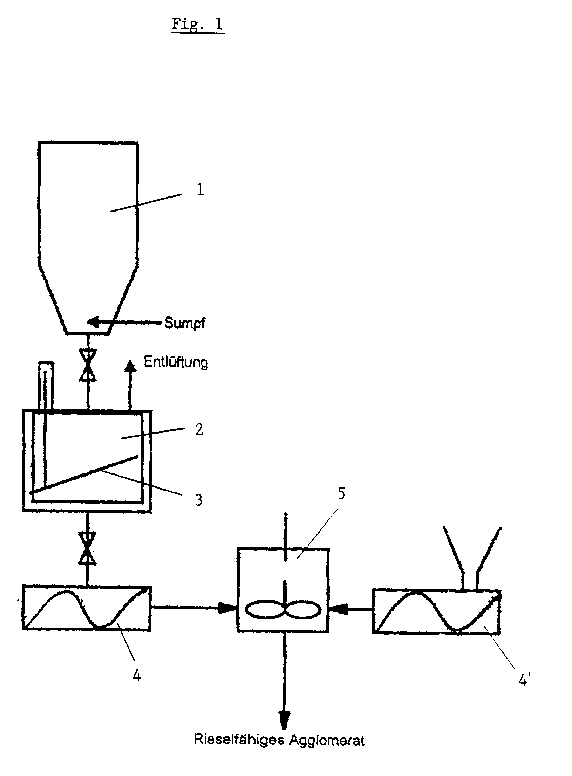

Fig. 1 stellt ein Flußdiagramm dar, das die Verarbeitung des Destillationssumpfes zu einem rieselfähigen Agglomerat zeigt.

Fig. 2 stellt ein Flußdiagramm dar, das die Verarbeitung des Destillationssumpfes zu einem Kunststoffgranulat zeigt.

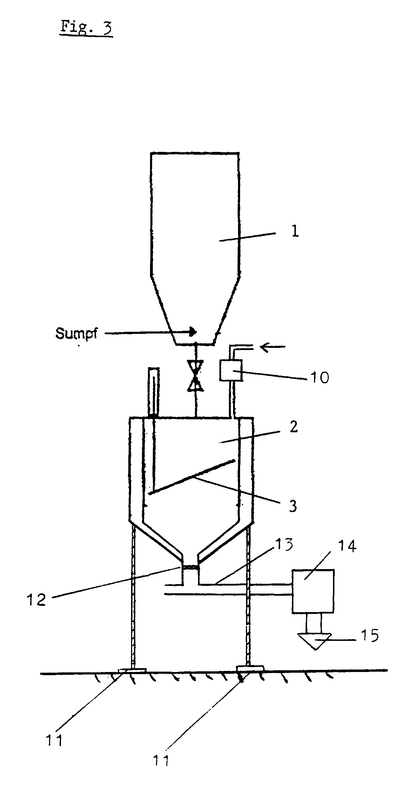

Fig. 3 stellt ein Flußdiagramm dar, das die Verarbeitung des Destiallationssumpfes zu einem Batchgranulat, zum Beispiel Antiblockmittel, Farbstoff oder Zuschlagstoffbatch zeigt. In der Verdampferanlage des in der DE 43 42 848 A1 beschriebenen Verfahrens bildet sich das Sumpfprodukt. Dieser heiße, im wesentlichen lösungsmittelfreie Rückstand wird aus der Destillationsblase (1) in einen doppelmantelbeheizten Vorratstank (2) abgelassen. Dieser ist vorzugsweise mit einer Rühreinrichtung (3) zur Homogenisierung ausgestattet. Über eine Dosiereinrichtung, vorzugsweise in Form eines Schneckenförderers (4) wird dem Vorratstank eine definierte Rückstandsmenge entnommen und einem Heißmischer bzw. Agglomerator (5) oder einer Granuliereinrichtung zugeführt. Gleichzeitig wird dem Heißmischer (5) eine definierte Menge eines Wirkstoffes zudosiert, vorzugsweise in Form eines Schneckenförderers (4'). Als Wirkstoffe eignen sich feste und flüssige Substanzen, wie beispielsweise anorganische Stoffe, wie zum Beispiel Kreide, Kaolin, Molsiebe, Silikate, Bleicherden oder Farbpigmente wie Eisenoxide, Titandioxid, Ruß oder auch organische Stoffe, zum Beispiel Farbpigmente, Thermo- und Lichtstabilisatoren, Antistatika, Gleitmittel und auch Polyethylengranulte, bzw. Polyehtylenpulver, -gries und dergleichen Schüttgut.

Aus dem Heißmischer (5) wird rieselfähiges Agglomerat erhalten, das beispielsweise zu einem Antiblockmittelbatch mit bis zu 70 Gew.-% Antiblockmittel führt. Das Mengenverhältnis Rückstand zu Antiblockmittel ist im übrigen in weiten Grenzen einstellbar. Der Rückstand ist also eine Trägersubstanz für die Herstellung von Wirkstoffbatchen, was naturgemäß zur Einsparung der Kosten für die Herstellung von derartigen Batchen führt.

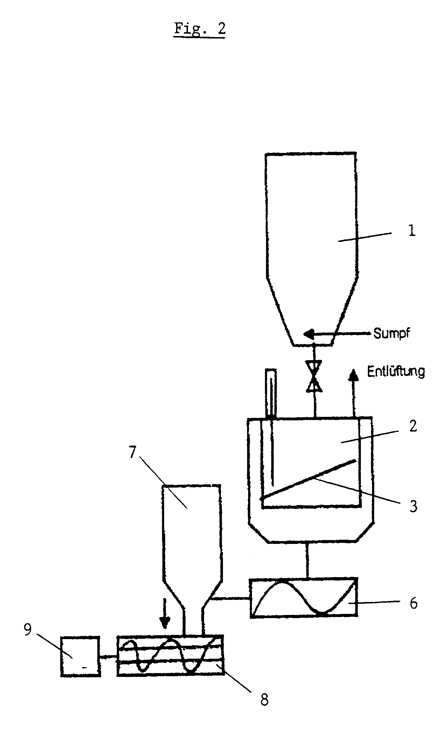

In einer weiteren speziellen Ausführungsform, die in Fig. 2 dargestellt ist, wird der Sumpf (Rückstand) aus der Destillationsblase (1) in heißem, im wesentlichen lösungsmittelfreien Zustand in einen doppelmantelbeheizten Vorratstank (2) abgelassen. Der Vorratstank (2) ist zur Homogenisierung mit einem Rührwerk (3) ausgerüstet, das gleichzeitig einen gleichmäßigen Austrag gewährleistet. Eine definierte Rückstandsmenge wird über einen Schneckenförderer bzw. eine Kolbendosierpumpe (6) in die Einzugszone eines Regranulierextruders (8) eingespeist. Gleichzeitig wird Regranulat über eine Dosiereinheit (7) mengengeregelt dem Extruder zugeführt. Die zudosierte Menge Rückstand beträgt 0,5 bis max. 2,0 Gew.-%, da höhere Konzentration zum Überschmieren der Extruderschnecke führen und damit Förderstörungen hervorrufen. Dem Extruder (8) ist ein Granulator (9) nachgeschaltet.

Die wertstoffliche Nutzung des Prozeßrückstandes hat große ökonomische und ökologische Vorteile:

Auf diese Weise kann in speziellen Foliensortimenten bei starker Eigenfarbe des Rückstandes eine anteilige Substitution des benötigten Farbbatches erfolgen.

Erfindungsgemäß kann eine Einsparung der Kosten für die Verbatchung von Zuschlagsstoff oder Farbe erreicht werden. Das Rückstandbatch enthält Thermostabilisatoren und es kann somit als anteiliges Substitut zur Nachstabilisierung von Recyclaten genutzt werden. Der hohe Anteil an paraffinischen Wachsen ermöglicht den Einsatz des Rückstandbatches als Verarbeitungsverbesserer bei der Herstellung von Recyclatfolien. Mit der wertstofflichen Nutzung des Rückstandes wird die Umwelt entlastet, indem Deponierraum nicht benötigt wird. Die erfindungsgemäße Mischung, die nach dem erfindungsgemäßen Verfahren erhältlich ist, ist somit in vielfältiger Weise vorteilhaft einsetzbar und bringt darüber hinaus nicht unerhebliche ökologische Vorteile mit sich.

Der Rückstand kann also in Folien für zum Beispiel Müllsäcke, Wertstoffsäcke und in Schrumpffolien erfolgreich wiederverwertet werden. Somit wird erst durch das erfindungsgemäße Verfahren ein vollständiges Recycling ohne Abfallprodukte des in der DE 43 42 848 A1 beschriebenen Verfahrens erreicht.

Unter Verwendung der erfindungsgemäßen Mischung lassen sich somit Polyolefinprodukte, insbesondere Polyethylen vorteilhaft herstellen.

In einer weiteren speziellen Ausführungsform, die in Fig. 3 dargestellt ist, wird der Sumpf (Rückstand) aus der Destillationsblase (1) in heißem, im wesentlichen lösungsmittelfreiem Zustand in einen doppelmantelbeheizten Vorratstank (2) abgelassen. Der Vorratstank (2) ist auf Wiegezellen (11) einer Wiegevorrichtung (10) gesetzt und mit einem Rührwerk (3) ausgerüstet, daß gleichzeitig einen gleichmäßigen Ausdruck gewährleistet. Der Austrag ist in Form einer Lochplatte (12) gestaltet. Dem Sumpfprodukt im Vorratstank (2) wird unter Rühren kontinuierlich mittels einer gravimetrischen Dosierung ein oder mehrere anorganische oder organische Materialien zugemischt. Die homogene Mischung wird über die Lochplatte (12) als Strang ausgetragen. Über eine Kühlvorrichtung (13) wird der Strang verfestigt und anschließend mittels eines Schneidwerkes (14) zu einem rieselfähigen Batch (15) verarbeitet.

Allgemein ist es auch möglich, das Sumpfprodukt durch Erkalten zu einem festen Block werden zu lassen, der dann weiteren Verarbeitungsstationen zugeführt werden kann. Das im allgemeinen wirtschaftlichere Verfahren besteht jedoch darin, die im Sumpfprodukt noch enthaltene Prozeßwärme zu nutzen und das Sumpfprodukt zu verarbeiten, bevor es abgekühlt ist.

## Patentansprüche

1. Verfahren zur wertstofflichen Verarbeitung eines im wesentlichen lösungsmittelfreien Sumpfproduktes aus der destillativen Aufarbeitung eines verschmutzten organischen Lösungsmittels, das bei der Reinigung von Polyolefin anfällt, wobei das Sumpfprodukt über eine Dosierung mit mindestens einem weiteren Material vermischt wird.

2. Verfahren nach Anspruch 1, dadurch gekennzeichnet, daß die Dosierung volumetrisch oder gravimetrisch durchgeführt wird.

3. Verfahren nach Anspruch 2, dadurch gekennzeichnet, daß die volumetrische Dosierung mittels eines Schneckenförderers und/oder einer Kolbendosierpumpe durchgeführt wird.

4. Verfahren nach einem der Ansprüche 1 bis 3, dadurch gekennzeichnet, daß als weiteres Material ein anorganisches oder organisches Material verwendet wird, zum Beispiel ein pulverförmiges Antiblockmittel oder ein Kunststoffschüttgut in Form von Granulat, Gries oder Pulver.

5. Verfahren nach Anspruch 4, dadurch gekennzeichnet, daß als Schüttgut ein Polyethylengranulat verwendet wird.

6. Verfahren nach Anspruch 4 oder 5, dadurch gekennzeichnet, daß die Vermischung des Sumpfproduktes mit dem anorganischen oder organischen Material in einem Rührgefäß, in einem Agglomerator oder einem Regranulierextruder durchgeführt wird.

7. Verfahren nach Anspruch 4 oder 6, dadurch gekennzeichnet, daß die Vermischung des Sumpfproduktes mit dem Antiblockmittel in einem Heißmischer durchgeführt wird.

8. Verfahren nach einem der Ansprüche 1 bis 7, dadurch gekennzeichnet, daß zwischen der Destillationsanlage und der Mengendosierung ein beheizter Vorratstank mit ggf. einer Rühreinrichtung zwischengeschaltet wird.

9. Mischung, erhältlich nach einem der Verfahren der Ansprüche 1 bis 8.

10. Verfahren zur Herstellung eines Polyolefinproduktes, dadurch gekennzeichnet, daß die Herstellung unter Verwendung einer Mischung nach Anspruch 9 durchgeführt wird.

11. Verfahren nach Anspruch 10, dadurch gekennzeichnet, daß als Polyelefin eine Polyethylenfolie verwendet wird.

12. Verfahren nach Anspruch 10 oder 11, dadurch gekennzeichnet, daß die Mischung als Antiblockmittel, Färbemittel, Thermostabilisator und Verarbeitunsverbesserungsmittel eingesetzt wird.
